# EUROPEAN PATENT APPLICATION

(11) **EP 1 795 678 A1**
(43) Date of publication of application: **13.06.2007**
(21) Application number: 06256054.5
(22) Date of filing: 27.11.2006
(51) Int. Cl.: E05B 65/20, E05B 47/00, H02K 5/00

(54) **Power drive**

(30) Priority: 06.12.2005 GB 0524856
(71) Applicant: ArvinMeritor Light Vehicle Systems (UK) Ltd, Birmingham, West Midlands, B30 3BW (GB)
(72) Inventor: Moore, Paul, Kings Norton Birmingham B38 9PD (GB)
(74) Representative: Jones, John Bryn

(57) **Abstract**

A power drive (10) for a vehicle latch assembly including: a drive chassis (12), and an electric motor (14). The motor (14) has a drive shaft (32) on which is mounted a gear (34), the motor (14) further including engagement means (30) for locating the motor (14) on the chassis (12). The chassis (12) includes a mount plate (36) having a slot (46) for receiving the drive shaft (32) during assembly of the power drive (10). The shaft (32) is permitted to slide down a first portion of the slot (46), thereby allowing the engagement means (30) to be received by a second portion (50) of the slot (46) so as to radially locate the motor (14) on the mount plate (36).

## Description

This invention relates to power drives, and in particular, but not exclusively, power drives for vehicle door latches.

It is common to provide vehicle door latches with power driven functions, such as power locking/unlocking, power closure, or power release. Such power functions are of increasing importance given the reliance on electrical control in modem vehicles, and the increase in door seal loads required to isolate the vehicle cabin from wind and tyre noise.

These power functions are typically powered by electric motors. It is common to provide the electric motor with a preinstalled pinion gear mounted on the drive shaft. This arrangement of the motor and gear will often be provided as a sub assembly which is subsequently assembled into the latch mechanism. However, the space envelope available to the designers of the latch is minimal, and as a result packaging of the latch assembly presents various engineering problems.

This is particularly true in the case of packaging the electric motor, which tends to be one of the larger components which make up latch assembly. Furthermore, the electric motor must be retained in position on the latch chassis to a relatively high degree of tolerance so as to ensure that the gears driven by the electric motor do not bind or become subject to excessive wear.

A known method of mounting the electric motor is to provide a mount plate with a U-shaped channel of the same width as the mount flange. In this method any diameter pinion can be used, however the U-shaped slot does not fully retain the mount flange in the radial direction.

A known solution to this problem is to provide the latch chassis with a mount plate having an aperture of greater diameter than the pinion diameter. It is then possible to pass the pinion through the aperture to mount the motor to the mount plate. The aperture retains the electric motor in the radial plane, and must therefore be dimensioned to accommodate a mount flange which is built into the casing of the electric motor. This particular method of mounting therefore limits the pinion diameter which in turn limits the design of the latch mechanism.

It is an object of a preferred embodiment of the present invention to overcome or at least mitigate some of the problems described above.

Accordingly the invention provides a power drive for a vehicle latch assembly including:
a drive chassis, and
an electric motor,
the motor having a drive shaft on which is mounted a gear, the motor further including engagement means for locating the motor on the chassis,
the chassis including a mount plate having a slot for receiving the drive shaft during assembly of the power drive,
wherein the shaft is permitted to slide down a first portion of the slot, thereby allowing the engagement means to be received by a second portion of the slot so as to radially locate the motor on the mount plate.

A second aspect of the invention provides a method of assembling a power drive for a vehicle latch assembly including the steps of providing
a drive chassis, and
an electric motor
the motor having a motor body, a drive shaft on which is mounted a gear and further including engagement means for locating the motor on the chassis,
the chassis including a mount plate having a slot for receiving the drive shaft,
the method further including the steps of
sliding the motor shaft down a first portion of the slot with the gear and motor body in opposite sides of the mount plate
until the engagement means is aligned with a second portion of the slot, moving the motor towards the mount plate so as that the engagement means is received by the second portion of the slot so as to radially locate the motor on the mount plate.

The invention will now be described by way of example only, and with reference to the following drawings, in which:-
Figure 1 is a schematic plan view of the drive assembly of the current invention;
Figure 2 is a schematic end view of the drive assembly of figure 1;
Figure 3 is an enlarged schematic plan view of a portion of the drive assembly of figure 1 showing the pinion and mount plate in further detail;
Figure 4 is an isometric representation of the drive assembly of the current invention
Figure 5 is a plan view of part of an alternative embodiment of drive assembly according to the present invention.

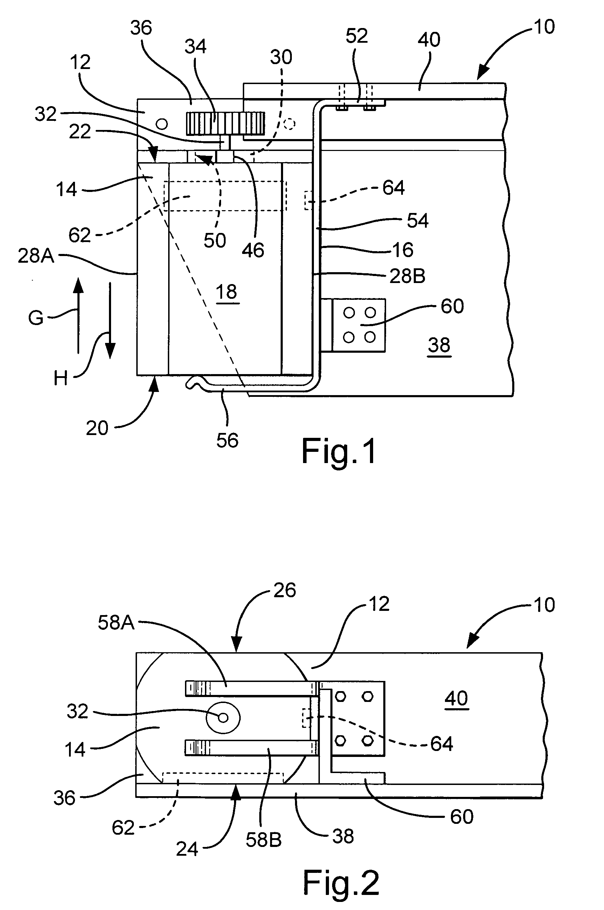

In figure 1, a power drive assembly 10 is shown having a drive chassis 12, an electric motor 14 and a retention arm 16.

The power drive assembly forms part of a latch assembly (not shown for clarity) which is mounted in a vehicle door as will be described in further detail shortly.

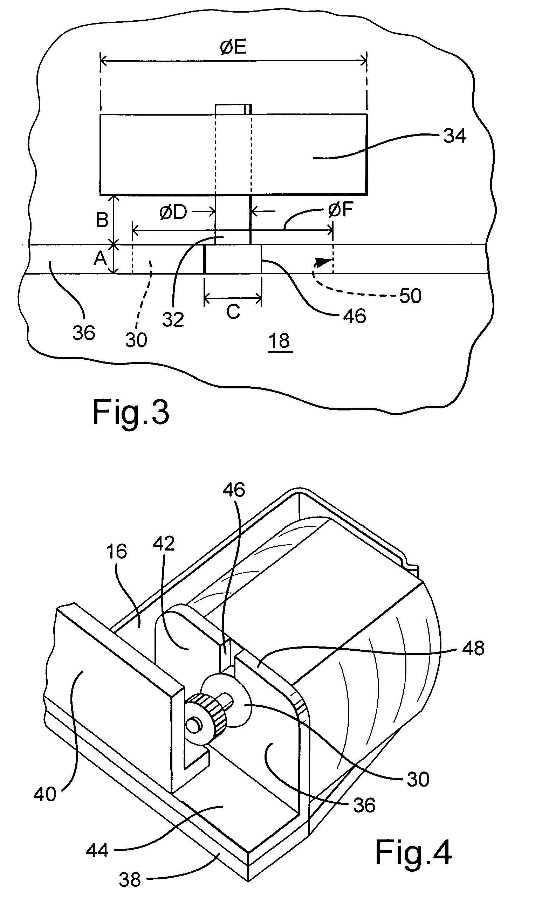

The motor includes a motor body 18 having a rear face 20, front face 22, bottom face 24, top face 26 and side faces 28A, 28B. The front face 22 defines a protruding boss in the form of a flange 30 (shown in dotted lines in figure 1 and more clearly in figure 3). The flange 30 surrounds a drive shaft 32 on which is mounted a pinion, or gear, 34 for driving a latch assembly mechanism (not shown). The flange 30 has a circular cross-section.

The drive chassis 12 is defined by a mount plate 36, a base plate 38 and a support plate 40. In this particular embodiment, the mount plate, base plate and support plates are defined by separate components joined by known method such as bolting, riveting, welding or bonding. However, it is conceivable within the scope of the invention that these features could be provided by a single component, or that the drive chassis could be provided without a support plate.

The mount plate 36 comprises an upright portion 42 and a base portion 44. The upright portion 42 defines a slot 46 which extends from a top edge 48 of the upright portion 42 to an aperture 50. The aperture 50 is generally circular and is dimensioned to achieve a push fit with the circular flange 30 of the electric motor 18 so that the motor is prevented from moving radially (i.e. in a direction parallel to the upright portion 42 of the mount plate) with respect to the mount plate.

The base portion 44 is attached to the base plate 38 by known means.

The retention arm 16 has a mount portion 52, a first portion 54 and a second portion 56 and is of a resilient nature. The mount portion 52 is mounted, by rivets (or other known attachment means) to the support plate 40. In other embodiments, it would be conceivable that the mount portion 52 would mount directly to the base portion 44 of the mount plate 36, or directly to the base plate 38. The first portion 54 of the retention arm 16 extends at 90 degrees to the mount portion 52 and extends along the side face 28B of the electric motor 18. The second portion 56 is arranged at 90 degrees to the first portion 54 and is defined by first and second resilient arms 58A, 58B. The first arm 58A is arranged above the drive shaft 32 as shown in figure 2, and the second resilient arm 58B shown below the drive shaft 32.

An abutment 60 is mounted to the base plate 38 in order to retain the first portion 54 of the retention arm 16 in position. This prevents the retention arm 16 from moving away from the motor side face 28B and allows the second portion 56 of the retention arm to hold the motor 14 firmly in position.

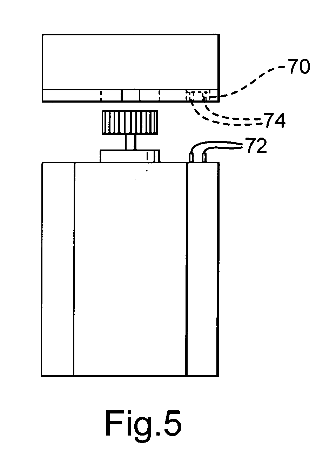

An electrical connector, shown in dotted lines at 62 in figure 1 and 2 is arranged between the electric motor 18 and the base plate 38. This provides an interface between a central control unit (not shown for clarity) and the electric motor in order to control drive of the gear 34 as will be described in further detail shortly. The connector comprises a plug (not shown for clarity) arranged on the base plate 38 and a socket (not shown for clarity) arranged on the motor. It will be appreciated that within the scope of the invention, the plug could be arranged on the motor and the socket on the base plate. In this embodiment, the motor is mounted onto the mount plate before the base plate 38 (which carries the plug) is fixed in position. The subsequent fixing of the base plate to the mount plate inserts the plug into the socket to form the electrical connection. In an alternative embodiment (shown in figure 5), a connector 70 is shown in which a pair of plugs 72 are provided on the front face of the electric motor for engagement with a pair of sockets 74. In this embodiment the plug moves into the socket in the same direction of movement as the motor mounting onto the mount plate. Whilst the sockets are provided on the mount plate, and the plugs engage the sockets as the motor is being mounted on the mount plate, it is conceivable that the motor carry the socket and the mount plate carry the plug. This embodiment allows the base plate 38 to be fixed to the mount plate 36 before mounting the motor into the mount plate 36. In a yet further embodiment, the socket (on the motor) is elongate so as to allow the plug (on the base plate) to be inserted into the socket and the socket to then move forward about the plug so as to allow mounting of the motor onto the mount plate after fitting the base plate in position.

The retention arm 16 additionally defines a projection 64 which prevents the motor 18 from rotating relative to the mount plate 36 when the gear 34 is driven by the motor.

In use, the power drive assembly forms part of a vehicle latch assembly, with the gear 34 being arranged to drive one of a number of power mechanisms, for example, child safety on/off, lock/unlock of the latch, or power closure of the latch. The drive chassis 12 may therefore often form part of, or even be defined by, a vehicle latch assembly chassis.

On receipt of a signal from a central control unit (not shown) via the electrical harness 62, the electric motor 18 drives the gear 34 which in turn acts on a latch assembly gear (not shown for clarity) so as to achieve a change in status in the latch. The power drive assembly will frequently be located in a vehicle door or boot lid. Alternatively, it may form part of a vehicle latch assembly mounted on the vehicle body.

As mentioned above in this particular embodiment, the motor flange 30 and corresponding aperture 50 are circular shaped. In alternative embodiments conceivable within the scope of the invention, the profile of the motor flange 30 and aperture 50 could be other than circular, for example square, oblong or other polygonal shape. Where this is the case, a projection 64 is not required, since the engagement of, say a square aperture, by the similarly polygonal (square) motor flange prevents rotation of the electric motor relative to the mount plate. Furthermore, it is conceivable that the aperture and flange are of a different shape so long as there is sufficient contact between them to retain the motor in position.

The particular configuration of features described above provides a distinct advantage in terms of assembly of the drive assembly as follows.

In conventional motor and mount plate arrangements, the mount plate does not define a slot which provides access to the aperture from the top surface of the plate and which radially retains the motor. As a result, the largest gear diameter which can be employed with the motor being fully radially retained by the mount plate is limited by the diameter of the motor flange. With the absence of a slot, assembly of the drive assembly is achieved by passing the gear through the aperture. Since the diameter of the aperture is dictated by the diameter of the motor flange, the construction of a power assembly with a gear diameter greater than the mount flange diameter presents additional complications.

However, the present invention overcomes this problem by removing the necessity to pass the gear 34 through the aperture 50. The provision of the slot 46 allows the exposed part of drive shaft 32, i.e. that part between the motor body and the gear, to be passed down the slot 46 until the shaft 32 is arranged approximately at the centre of the aperture 50. At this point, the electric motor 18 may be moved towards the mount plate 36 (direction G in figure 1) so as to engage the motor flange 30 in the aperture 50.

Referring now to figure 3, the diameter of the gear 34 is shown at E, and the diameter of the aperture 30 is shown at F. It will be appreciated that diameter E is greater than diameter F. This is achievable in the present invention since the drive shaft 32 is able to pass down the slot 46 (the diameter D of the drive shaft 32 being less than the width C of the slot 46).

In order to allow the drive shaft 32 to pass down the slot 46, the gear 34 passes down a first side of the mount plate 36 and the mount flange 30 of the electric motor 18 passes down the other side of the mount plate 36. In the present embodiment, the depth of the mount flange is less than or equal to the width A of the manual plate. It therefore follows that the distance B between the mount plate 36 and the gear wheel 34 is greater than the width A of the mount plate 36. In an alternative embodiment, where the depth of the flange is greater than A, the new distance B' between the mount plate and the gear wheel is greater than the depth of the flange A.

Referring again to figure 1, it will be appreciated that the second portion 56 of the retention arm 16 acts on the rear face 20 of the electric motor 18 in order to retain the mount flange 30 within the aperture 50. As discussed above, in order to allow the drive shaft 32 to pass down the slot 46 during assembly of the drive assembly, the drive flange 30 passes down the side of the mount plate 36 facing the front face 22 of the electric motor 18. In order for this to occur, the electric motor must be displaced by at least the width of the mount plate 36 in longitudinal direction H as shown in figure 1 in order to allow mounting of the electric motor 18 onto the mount plate 36.

Firstly, with the abutment 60 in position, the second portion 56 deflects at the junction of the second portion 56 and first portion 54. Secondly, when the abutment 60 is not in position, the first portion 54 is able to deflect at the junction between the first portion 54 and the mount portion 52 in addition to the deflection of the end portion 56. It will be appreciated that it is nonetheless possible to assemble the drive assembly with the abutment 60 in place, however additional advantage is obtained by attaching the abutment 60 to the face plate 38 following the insertion of the electric motor 18 into its mounted position on the mount plate 36.

Assembly of the drive assembly is therefore achieved as follows.

Step 1. The mount plate 36 and support plate 40 are assembled by means of bolts, rivets, bonding or other known methods of attachment.

Step 2. The drive shaft 32 is slid down the slot 46 until the shaft is located at approximately the centre of the aperture 50.

Step 3. The electric motor 18 is moved forward in longitudinal direction G (figure 1) so as to engage the flange 30 in the aperture 50.

Step 4. The base plate 38 is fixed to the mount plate 36 by known means at the same time as engaging the electrical connector 62.

Step 5. The retention arm 16 is attached to the support plate 40, or other mounting position on the drive chassis 12.

Step 6. The abutment 60 is attached to the base plate 38 so as to retain the first portion 54 of the retention arm 16 in position.

Step 7. The projection 64 is crimped or otherwise bent over so as to prevent rotation of the electric motor with respect to the mount plate 36.

It will be appreciated that where the electrical connector of figure 5 is used, the base plate can be fixed to the mount plate before the motor is mounted onto the mount plate.

It will also be appreciated that certain features of the mount plate 36, base plate 38 and support plate 40 may be changed within the scope of the invention.

Similarly, the particular dimensions of the retention arm 16 may be changed within the scope of the invention.

## Claims

1. A power drive for a vehicle latch assembly including:
a drive chassis, and
an electric motor,
the motor having a drive shaft on which is mounted a gear, the motor further including engagement means for locating the motor on the chassis,
the chassis including a mount plate having a slot for receiving the drive shaft during assembly of the power drive,
wherein the shaft is permitted to slide down a first portion of the slot, thereby allowing the engagement means to be received by a second portion of the slot so as to radially locate the motor on the mount plate.

2. The power drive of claim 1 including a retention arm, wherein the retention arm is mounted on the chassis so as to bias the motor in use towards the mount plate.

3. The power drive of claim 2 wherein the retention arm has a mount section, a first section and a second section, the first section extending between the mount section and second section along a side of the motor, the second section applying a retaining load to the motor.

4. The power drive of claim 3 wherein in use the first section is prevented from deflecting away from the motor by an abutment mounted on the drive chassis.

5. The power drive of claim 3 or 4 wherein the second section is defined by two resilient arms, one arranged above the motor shaft, the other arranged below the motor shaft.

6. The power drive of any preceding claim wherein the engagement means is longitudinally displaced from a front face of the motor.

7. The power drive of any preceding claim wherein the engagement means is a flange arranged about the drive shaft.

8. The power drive of claim 6 or 7, wherein the first portion of the slot is elongate, the second portion defining an aperture in communication with the elongate first portion, the engagement means and aperture in contact so as to securely locate the motor radially with respect to the housing.

9. The power drive of claim 8 wherein the aperture and engagement means are substantially circular in cross-section.

10. The power drive of any preceding claim wherein the retention arm has a projection which engages a side face of the motor so as to hold the motor rotationally secure with respect to the chassis.

11. The power drive of any preceding claim including an electrical connection arranged between the drive chassis and motor so as to assist the rotational securing of the motor relative to the chassis.

12. The power drive of any one of claims 2, or 3 to 11 when dependent on claim 2, wherein the resilient arm is sufficiently resilient to permit movement of the motor away from the mount plate during assembly of the power drive by a distance greater than the longitudinal displacement of the engagement means from the front face of the motor.

13. The power drive of any preceding claim wherein the drive chassis is a vehicle latch assembly chassis.

14. A vehicle latch assembly including the power drive of any preceding claim, the assembly further including a power closure mechanism or a power lock/unlock mechanism or a power opening mechanism on a power child safety on/off mechanism, wherein the gear drives the mechanism to change the status of the latch assembly.

15. A method of assembling a power drive for a vehicle latch assembly including the steps of providing
a drive chassis, and
an electric motor
the motor having a motor body, a drive shaft on which is mounted a gear and further including engagement means for locating the motor on the chassis,
the chassis including a mount plate having a slot for receiving the drive shaft,
the method further including the steps of
sliding the motor shaft down a first portion of the slot with the gear and motor body in opposite sides of the mount plate
until the engagement means is aligned with a second portion of the slot,
moving the motor towards the mount plate so as that the engagement means is received by the second portion of the slot so as to radially locate the motor on the mount plate.

16. The method of claim 15 wherein the chassis includes a base plate, the method including the step of fixing the base plate to the mount plate after the mounting of the motor onto the mount plate so as to further support the motor.

17. The method of claim 15 or 16 wherein there is further provided a retention arm for, in use, biasing the motor towards the mount plate, the method including the further step of:
mounting the retention arm on the mount plate after mounting the motor on the mount plate.

18. The method of claim 17 wherein the retention arm has a mount section, a first section and a second section, the first section extending between the mount section and second section along a side of the motor, the second section applying a retaining load to the motor,
the method including the further step of
preventing deflection of the first section away from the side of the motor by fixing an abutment to the chassis to retain the first section in place.
